# EUROPEAN PATENT SPECIFICATION

(11) **EP 0 512 690 B1**
(45) Date of publication and mention of the grant of the patent: **10.01.1996**
(21) Application number: 92303169.4
(22) Date of filing: 09.04.1992
(51) Int. Cl.: F15B 11/06, F16D 48/02, F16H 63/30

(54) **Actuator control system for devices such as clutches**
System zur Steuerung von Stellgliedern für Vorrichtungen wie Kupplungen
Système de commande d'un actionneur pour des dispositifs tels que des embrayages

(30) Priority: 02.05.1991 GB 9109572
(43) Date of publication of application: 11.11.1992
(73) Proprietor: EATON CORPORATION, Cleveland, Ohio 44114 (US)
(72) Inventor: Cottam, Michael John, Hesketh Bank, Preston, Lancashire (GB)
(74) Representative: Douglas, John Andrew

(56) References cited:
- EP-A- 0 324 553
- FR-A- 1 269 305
- GB-A- 1 347 923
- GB-A- 2 195 735
- US-A- 4 388 806

## Description

### BACKGROUND OF THE INVENTION

### Related Applications

The present application claims priority from British Provisional Specification Application 9109572.9 filed May 2, 1991.

### Field of the Invention

The present invention relates to a clutch actuator control system for controlling the engagement and disengagement of clutches, such as normally engaged vehicular master clutches, in response to command output signals from a microprocessor based control unit or the like. More particularly, the present invention relates to a clutch actuator control system for automatically controlling the engagement and disengagement of the vehicular master clutch wherein the actuator includes a piston or combination piston, one face of which is driven pneumatically and another face of which drives a clutch operator through linkage.

### Description of the Prior Art

Automatic actuator control systems for controlling the engagement and disengagement of vehicular master clutches are well known in the prior art and are often incorporated into automated or semi-automated transmission systems. Typically, such actuator control systems have comprised electric, pneumatic and/or hydraulic clutch operators controlled by microprocessor based electronic control units, i.e., ECUs, which process a plurality of input signals according to predetermined logic rules to issue command output signals to various control devices such as solenoid control valves and the like. Examples of such control systems may be seen by reference to U.S. Patent Nos. 4,081,065 and 4,361,060, the disclosures of both of which are hereby incorporated by reference.

In the automatic control of vehicular master clutches, especially during the reengagement of such clutches, an important control parameter is the current value of a controllable variable at the point of reengagement of the clutch known as the "touch point" or the point of "incipient engagement" of the clutch. Typically, during reengagement of vehicular master clutches, especially during reengagement of a master clutch for a start from stop operation, the master clutch is rapidly moved from the fully disengaged position thereof to the point of incipient engagement, and thereafter the clutch is reapplied in a modulated fashion according to predetermined logic rules. Control methods/systems for determining the value of controllable parameters corresponding to the incipient engagement point of a vehicular master clutch are known in the prior art and may be seen in greater detail by reference to U.S. Patent Nos. 4,646,891 and 4,899,858, the disclosures of both of which are hereby incorporated by reference.

Vehicular master clutch control systems utilizing an actuator having two pistons rigidly connected together and running in separate cylinders wherein one piston is driven pneumatically and the other piston drives a clutch operator through a hydraulic linkage are known in the prior art and an example thereof may be seen by reference to European Patent No. EP 324,553B, the disclosure of which includes the pre-characterizing portion of Claim 1. Other combination hydraulic and pneumatic drives are shown in FR-A-1 269 305 and US-A-4 388 806.

The prior art devices were not totally satisfactory as, due to wear, constant recalibration was required to calibrate various feedback signals to selected operational positions of the clutch and/or clutch condition sensors were required at the clutch which required complicated and/or expensive wiring and/or wiring harnesses and required sensors exposed to difficult vibrational and heat conditions and the like and/or the clutch actuators were not self-compensating for wear.

### SUMMARY OF THE INVENTION

In accordance with embodiments of the present invention which is set out itself in claim 1, the drawbacks of the prior art vehicular master clutch actuator control systems are minimized or overcome by the provision of an actuator control system for controlling the engagement and disengagement of a vehicular master clutch which is self-compensating for wear and other free play of the master clutch, and which allows clutch operating position to be accurately determined as a function of the axial position of a remote clutch actuator which may be located in a relatively non-hostile environment relative to the operating environment of a vehicular master clutch.

The above is accomplished by providing an actuator control system for vehicular master clutch wherein the actuator includes a combined piston having two piston faces rigidly connected together and running in separate cylinders wherein one piston face is driven pneumatically and another face drives a clutch operator through a hydraulic link. The present invention proposes to use the well-known ability of a hydraulic coupling to correct for mechanical free-play and wear by means of a reservoir with the object of avoiding having to constantly correct input signals according to sensed mechanical variations. By utilizing the piston structure described above, the present invention is effective to achieve accurate operating condition of the clutch by accurately positioning the remotely controlled pneumatic piston face.

Preferably, the present invention includes a master cylinder assembly in which a rigid combination piston is pneumatically driven and hydraulically driving and having a hydraulic reservoir for providing automatic compensation for mechanical free-play and wear of the controlled vehicular master clutch. As is well known, vehicular master clutches are typically spring biased to a fully engaged position and moveable by some type of clutch operating device against the spring bias into a fully disengaged position. The master cylinder assembly includes the transducer to generate signals indicate of the position of the piston and will include pneumatic valving, operated in accordance with command output signals from the electronic control unit, to provide controlled pneumatic drive of the piston in dependence upon the transduced position-indicating signals. As indicated, it is preferred that the pneumatic valves and/or the transducer may be installed with manifolding and electrical connections to the valves and the transducer in the master cylinder assembly housing structure.

In the preferred embodiment, at least two solenoid control valves are provided for connecting a chamber of the pneumatic cylinder associated with the actuation piston to either a high pressure source or a low (atmosphere) source. Preferably, two pairs of solenoid valves, a fine flow valve and a course flow valve, are provided for selectively pressurizing and exhausting the pneumatic operating chamber. As is known, control of the valves may be by a pulse width modulation method or the like.

Accordingly, it may be seen, that a new and improved actuator control system for controlling the engagement and disengagement of a vehicular master clutch is provided which allows the clutch position to be accurately determined as a function of the axial position of a remote actuator device and which is self compensating for wear and free-play of the clutch thereby eliminating the necessity for relatively frequent recalibration of the clutch control system. An automatic clutch provided with a position sensor for a clutch actuator member is disclosed in GB-A-2 195 735.

These and other objects and advantages of the present invention will become apparent from a reading of the detailed description of the preferred embodiments taken in connection with the drawings.

### Brief Description of the Drawings

Figure 1 is an enlarged side view, in section, of a master cylinder structure incorporating pneumatic valving and piston position transducing devices.

Figure 2 is an end view of the master cylinder shown in Figure 1 taken along the lines II-II in Figure 1.

Figures 3, 4, and 5 are schematic illustrations of the actuator control system of the present invention.

Figures 6, 7, 8 and 9 show the manifolding, valve accommodation and transducer outputing of a detachable part of the master cylinder structure of Figures 1 and 2, with the valves removed.

### Description of the Preferred Embodiment

In the following description of the preferred embodiment, certain terms will be used for convenience and reference only and are not intended to be limiting. The terms "upwardly", "downwardly", "rightwardly" and "leftwardly" will designate directions in the drawings to which reference is made. The words "inwardly" and "outwardly" will refer to directions towards and away from, respectively, the geometric center of the device and designated parts thereof. The above applies to the words above specifically mentioned, derivatives thereof and words of similar import.

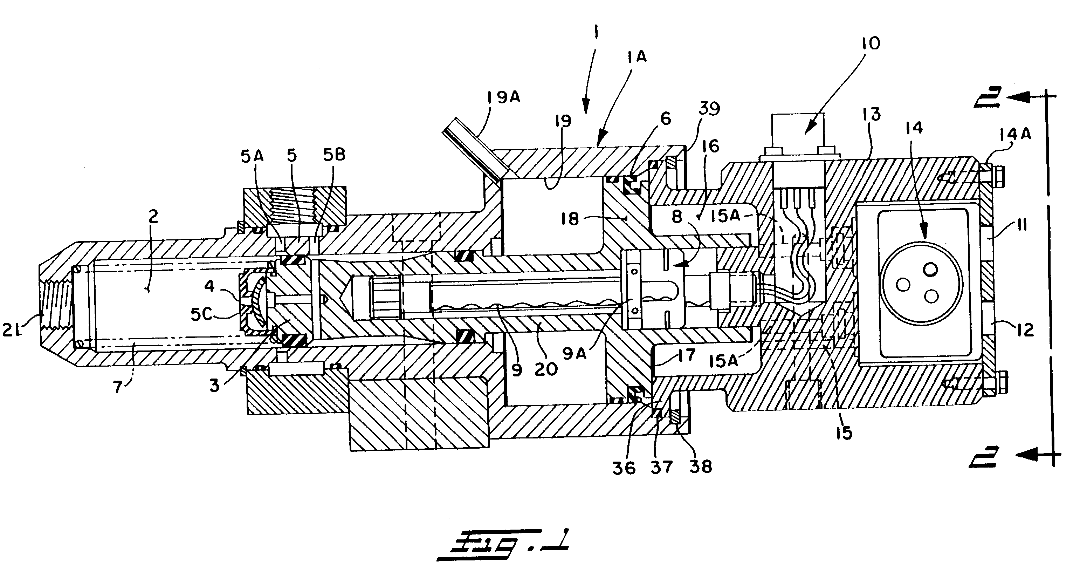

Referring to Figure 1, a master cylinder assembly 1 forming a portion of the vehicular master clutch actuator system of the present invention is illustrated. Master cylinder assembly 1 includes a generally cylindrical housing 1A which houses a hydraulic cylinder 2 which is kept full between working strokes of a hydraulic piston 3 having a drive face 4 by a hydraulic reservoir through a reservoir inlet 5 as is known in hydraulic systems of this type. Briefly, when piston 3 is fully retracted the reservoir fluid enters via a sub-inlet 5A, and while the piston is being retracted, hydraulic fluid enters via a sub-inlet 5B and a one-way or check valve 5C.

The structure of the hydraulic piston 3 and the inlet 5 from the hydraulic reservoir are known in the prior art and are important to the operation of the present invention. At full retraction of the hydraulic piston 3, i.e., with an extension thereof against a stop surface 6 defined in the body 1A under the bias of a return spring 7, the piston will start each working stroke with the cylinder 2 and the conduits to the clutch or other device fully charged with hydraulic fluid which will mean that the driven position of piston 3 during each clutch actuation represents the degree of engagement of the clutch, whatever the state of wear of the ladder. With an automatic but direct mechanical clutch, it is most desirable to be able to engage and disengage the clutch every time in a predictable manner in response to command engagement/disengagement command output signals from a control unit and to be able to recognize the degree of such engagement or disengagement in order to provide accurate feedback signals to the control unit. The preference according to the present invention is to transduce the piston position by a linear potentiometer 8 and to keep it constant for an initial or given degree of sensed clutch engagement. Accordingly, the piston carries a linear resistance 9 forming part of the potentiometer and moving with the piston against a fixed slider member 9A to transduce the piston axial position in a piston-indicative voltage output at terminals 10.

To selectively drive piston 3 leftwardly, or selectively to allow piston 3 to retract rightwardly under the bias from return spring 7, high and low pressure pneumatic sources must be connected to respective input ports, 11 and 12, which lead to a manifold area 13 where they can be made selectively effective by solenoid valves 14. When appropriate ones of the valves 14 are open, the selected pneumatic source is communicated via course and/or fine orifices respectively in the cylinder block, to reach a piston driving space or chamber 16. Chamber 16 is bounded on its left by the driven face 17 of a second piston 18 which can slide in a pneumatic cylinder bore 19 provided in the body 1A. The second piston 18 is biased rightwardly by return spring 7 and upon pressurization of chamber 16 is effective to move leftwardly against the bias of spring 7.

The first and second pistons, 3 and 18, respectively, form a combination piston structure rigidly connected together by generally axially extending cylindrical structure 20 and are attached for joint axial movement in the separate cylinder bores 2 and 19. Therefore, when the combination piston structure is driven away from fully retracted position against the stop surface 6, the combination hydraulically drives the device or clutch connected to the hydraulic outlet port 21 of the body 10. The axial position of the combination piston in body 1A, and thus the corresponding operating condition of the driven device or clutch, is registered by the electrical signals outputed at terminal 10.

As an alternative to the combination piston structure of actuator assembly 1, one piston sliding in one cylinder, and exposed to hydraulic fluid on one face thereof, and to pneumatic high or low pressures on the other face thereof, could be utilized. However, the combination piston structure of assembly 1 is preferred as this combination allows isolation of the two working fluids and for appropriately proportioned piston areas to give desired mechanical advantages and the like.

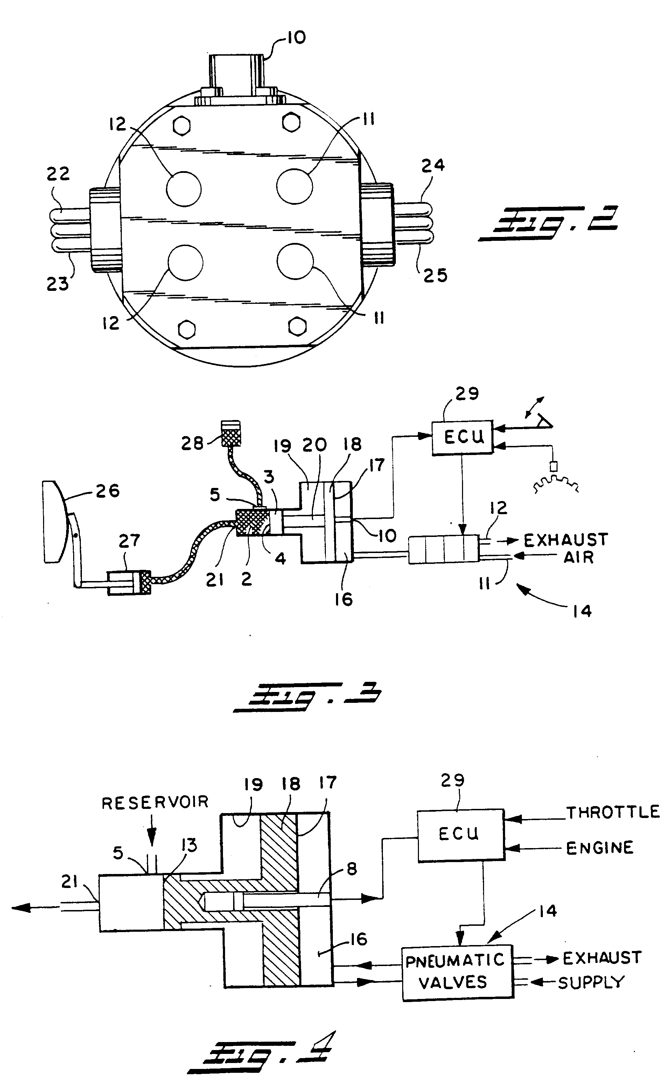

Figure 2 is a view of the righthand of Figure 1 taken along the lines II-II in Figure 1. In Figure 2, it can be seen that two apertures 11 are provided to receive high pressure source conduits which are controlled by the course fill and fine fill solenoid valves 14 illustrated in Figure 1 and two apertures 12 perform like functions for low pressure, i.e., exhaust to atmosphere. Electrical terminals 22-25 serve to supply individual electrical power to the four solenoid valves provided in the manifold space 13.

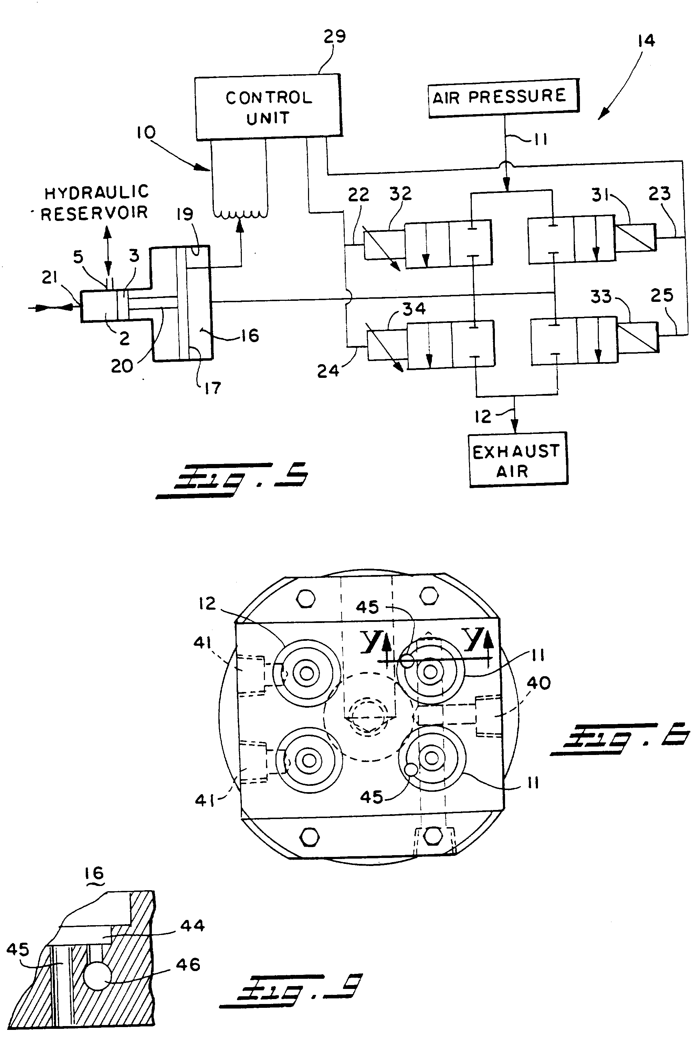

The actuator control system of the present invention schematically illustrated in Figures 3, 4 and 5. Figure 3 schematically illustrates a clutch 26 and slave cylinder 27 therefore connected to hydraulic output 21, and a hydraulic reservoir 28 connected to reservoir port 5 to insure that the lines between piston face 4 and the slave cylinder 27 are always fully charged with hydraulic fluid. The solenoid valves 14 are shown as external items, which is one option, although their housing within the housing 1A is preferred, as illustrated in Figure 1. Figure 3 also schematically illustrates the computer, or more accurately, microprocessor based electronic control unit (ECU) 29 which receives inputs from a variety of sources including a transducer signal from terminal 10 and issues a plurality of command output signals including command output signals to the pneumatic control valves 14. Typically, the ECU will receive at least three input signals in order to select the valve drives and to complete their start and finish time. The three inputs are transduced signals indicative of the degree of opening of throttle, the engine speed, and the output from transducer terminals 10 indicating the degree of engagement or partial disengagement of the clutch.

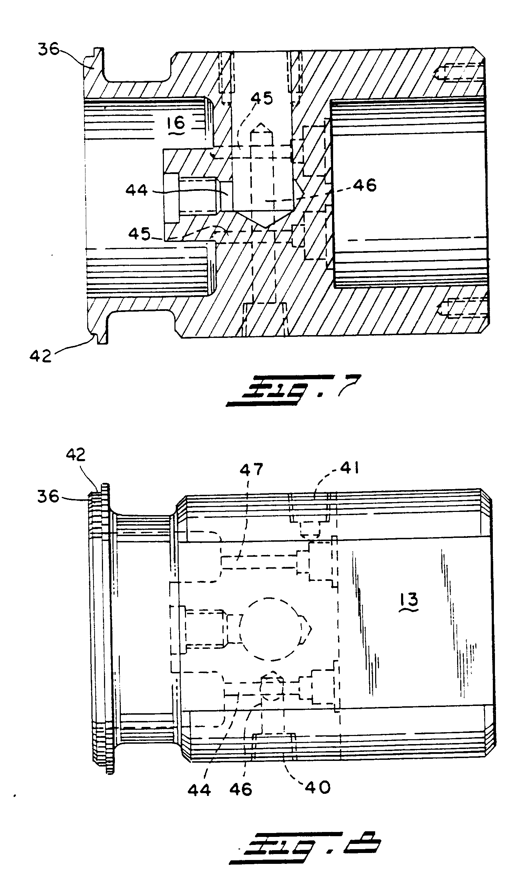

Figure 4 is similar to Figure 3 except the actuator assembly is illustrated in large detail.

As indicated previously, the present invention could be applied to the actuation or drive of other hydraulically operated devices other than vehicular master clutches.

Figure 5 schematically illustrates the high pressure and exhaust pneumatic solenoid control valves 31 - 34. As illustrated, pressurized air is provided through valves 31 and 32 which may control a coarse fill or fine fill orifice, respectively, while exhaust may be controlled by solenoid valves 33 and 34 which in like manner may control a coarse or fine orifice. Alternatively, the solenoid valves themselves may have a coarse On/Off control and a fine On/Off control respectively. The control of the valve may be by the width of pulses in a power-amplified square pulse wave. Such pulse width modulation valve and the use of parallel course and fine fill or course or fine exhaust controlled conduit is, of course, known in the prior art.

The coarse controlled valves could use a different type of valve which need only be suitable for On/Off control. The pulse valves which must be of a quicker reacting type, which will closely and continuously follow the duty cycle of the modulation. It will often be preferable to use only one exhaust valve and/or one high pressure feed valve, if they can be operated at 100% duty cycle for On/Off operation and also at duty cycles graded down to 5% or even 0. Such solenoid valves controlled by pulse width modulation are available from the Honeywell Corporation.

There are many control methods and systems for the automatic operation of vehicular master clutches as may be seen by reference to above-mentioned U.S. Patents Nos. 4,081,065; 4,361,060; 4,646,891 and 4,899,858, the disclosures of all of which are hereby incorporated by reference.

Typically, such control system involved a calibration or learning process where various clutch operating positions of interest, such as the point of incipient engagement, the point of full engagement, etc., are determined with time and a controlled or monitored clutch actuator parameter is calibrated thereto. Such a calibration procedure is discussed in U.S. Patent No. 5,014,832, the disclosure of which is hereby incorporated by reference. According to the present invention, the clutch operational position is monitored by observation of the hydraulic drive piston position by means of transducer 8. Thereafter, various inputs such as inputs indicative of engine speed, road speed, and the like, are received by the ECU unit and processed according to predetermined logic rules to issue command output signals for controlled operation of the clutch such as controlling the rate of increasing partial engagement of the clutch. The rate of clutch engagement may be selected according to the prearranged programming for a desirable clutch full engagement period or for a desirable rate of reduction of the speed difference across the clutch. This rate may vary continuously, rapidly according to the amount of throttle being used, etc. Moreover, the rates of clutch engagement and disengagement during vehicle start or stop operation may be considerably different from the rates of engagement during a running gear shift. Various methods and schemes for the automatic control of vehicular master clutches are known in the prior art and the actuator control of the present invention is suitable for use with any of these control strategies.

Preferably, the pneumatic exhausting and pressurizing of chamber 16 is conducted along portions of the axes of the four solenoid valves 31-34, so that the manifolding involves conduits connecting the valve cavities with the space 16. The electrical terminals of the valves may lie wholly outside to the rear or to the side of the body 1A. Space 16, or a space in the manifold just downstream of the high pressure valve can contain an excessive pressure plug to exhaust erroneous high pressures to atmosphere. However, presently preferred is the use of at least two valves associated with conduits 11 which are normally closed, therefore, a spring bias closed, and in which high pressure fluid is fed into chamber 16, e.g. upwards as viewed Figure 9 via a channel 45. Pressurized fluid is exhausted from chamber 16 after a 180 degree directional change via a parallel channel 44 finally exiting the manifolding via a cross-conduit 46 communicating with atmosphere. The feed channels 45 and the exit channel 44 can be seen in Figure 7. The result especially will be 180 degree turn is that excessively high pressures increasingly tend to open the bias closed valve, and relieve the pressure to the atmosphere, even if the valve is not driven open by the solenoid action.

There need be only one conduit 47 connected with the chamber 16 for each exhaust valve since both inlet and outlet are unnecessary as also is any excess pressure security system. Moreover, the high pressure valves should be normally shut, i.e., biased shut when unenergized, so that the control system failures tend to result in the clutch remaining or becoming engaged, which is the safer condition to adopt as the default position.

The use of both coarse and fine pneumatic controls for both the pressure and exhaust controls of clutch position may not always be necessary for satisfactory closed loop behavior. The fine controls by pulse width modulation or other variable duty cycle or other control circuits may be of many types as is known in the prior art. The solenoid valves presently preferred are manufactured by Honeywell Corporation and have a speed of operation to respond to pulse width modulation control. The speed to complete course engage or disengage can be .07 to 1.4 seconds, the complete range of fine control movement being something over 3.0 seconds, by way of example only. The pulse width modulation rate may be 30 Hz. and the duty cycle down to 4.7%.

It will be observed that the structure of body 1A illustrated in Figure 1 is built in three main pieces, namely, firstly, a leftward structure containing the hydraulics; the two working cylinder boards 2 and 19 in which the piston components 3 and 18 are received, accommodations for hydraulic reservoir inlet 5 and a breather 19A (to maintain atmospheric pressure to the left piston 18); secondly, the piston combination, is return spring 7 and the transducer 9, 9A of the position, particularly the extreme leftward positions each time, of pneumatic drive of the pistons 3 and 18; and, thirdly, the rightward structure being the manifold lock which accommodates the valves 14, their supply and exhaust conduits 11 and 12 and a security end cap 14A, the transducer combinations 10 and the manifold conduits 15, 15A from the valve to the pneumatic piston chamber 16 effective on the surface 17 of the piston combination.

The leftward and rightward structures are altogether by an annular flange 36 of the manifold structure being compressed against resilient O-ring 37 by means of a circular spring clip 38 which springs into an internal groove 39 provided in the leftward block. The rightward structure, or manifold, can be as aforesaid as shown in somewhat more detail in Figure 6-9.

Figure 6 is much as Figure 2, but shows as hidden detail pneumatic high pressure and exhaust conduits respectively 40 and 41, for supplying their respective valves. Figure 7 shows one course feed and one fine feed conduit, each reference 45 to pneumatic pressure chamber 16. Also shown is retaining flange 36 with its annular groove 42 to accommodate O-ring 37.

In Figure 8, the space 13 for the valves 14 (themselves not shown in Figure 8) can be seen. Figure 8 shows a 90 degree different view from that of Figure 7, not sectionally but showing hidden detail of the manifolding.

Figure 9 shows a section on a line Y-Y in Figure 6 including the two axial channels 44 and 45 and the escape conduit 46 are illustrated.

## Claims

1. An actuator control system for controlling operation of a hydraulically operated vehicular master clutch (26) constantly biased to a first fully engaged position and adapted to be driven to a second position by application of pressurized hydraulic fluid to a hydraulic operator (27), said system comprising:
an actuator assembly (1) including an actuator piston (3/18) axially movable in an actuator housing (1A) and having a first face (4) and an opposed second face (17), said first face being exposed to a first chamber (2) constantly filled with hydraulic fluid and being fluidly connected to said dydraulic operator, and the second face being exposed to a second chamber (16) which is itself selectively subjected to either high or low pneumatic pressures, and including means (5/28) constantly charging said first chamber with hydraulic fluid and means (7) constantly biasing said piston towards said second face, high pressure on said second face being effective to urge said piston towards first face to apply pressurized hydraulic fluid on said hydraluic operator; and
a control unit (29) for controlling the pressurization of said second chamber, said system characterized by;
a transducer (8/9, 9A) located in the interior of said housing for sensing a current axial position of said piston in said housing and for providing input signals to said control unit indicative thereof.

2. The actuator control system of claim 1 wherein said actuator piston comprises a first piston member (3) slidably and sealingly received in a first bore (2) provided in said housing and carrying said first piston face and a second piston member (18) carrying said second piston face (17) and slidably and sealingly received in a second bore (19) provided in said housing, said first and second bores being axially separated in said body and fluidly isolated from one another.

3. The actuator control system of claim 2 additionally comprising a first solenoid controlled valve (31 or 32) fluidly connected to a source of pressurized fluid and a second solenoid controlled valve (33 or 34) fluidly connected to an exhaust for selectively pressurizing and exhausting said second chamber(16).

4. The actuator control system of claim 3 wherein said solenoid controlled valves are located in the interior of said housing.

5. The actuator control system of claim 3 or 4 wherein said solenoid controlled valves (31-34) are operated in response to command output signals from said control unit (29).

6. The actuator control system of claims 3,4 or 5 wherein said connection of said first solenoid valve to said source of pressurized fluid includes means for exhausting excessive pressure independent of the operation of said solenoid valves.

## Patentansprüche

1. Betätigersteuersystem zum Steuern des Betriebs einer hydraulisch betriebenen Fahrzeughauptkupplung (26), die konstant in eine erste vollständig im Eingriff befindliche Position vorgespannt ist und geeignet ist, in eine zweite Position durch Anwendung von unter Druck stehendem Hydraulikströmungsmittel an eine hydraulische Betätigungseinrichtung (27) angetrieben zu werden, wobei das System folgendes aufweist:
eine Betätigeranordnung (1) mit einem Betätigerkolben (3/18), und zwar axial bewegbar in einem Betätigergehäuse (1A) und mit einer ersten Stirnseite (4) und einer gegenüberliegenden zweiten Stirnseite (17), wobei die erste Stirnseite zu einer ersten Kammer (2) hinweist (exponiert ist), die konstant mit Hydraulikströmungsmittel gefüllt ist und strömungsmittelmäßig mit der hydraulischen Betätigungseinrichtung verbunden ist, und wobei die zweite Stirnseite zu einer zweiten Kammer (16) hinweist (exponiert ist), die selbst selektiv entweder hohen oder niedrigen pneumatischen Drücken ausgesetzt ist, und mit Mitteln (5/28), die konstant die erste Kammer mit Hydraulikströmungsmittel beladen, und mit
Mitteln (7), die konstant den Kolben zu der zweiten Stirnseite hin vorspannen, wobei der hohe Druck auf der zweiten Stirnseite wirksam ist, um den Kolben zu der ersten Stirnseite hin zu drücken, um unter Druck stehendes Hydraulikströmungsmittel an die hydraulische Betätigungseinrichtung anzulegen; und eine Steuereinheit (29) zum Steuern bzw. Regeln der Unterdrucksetzung der zweiten Kammer, wobei das System gekennzeichnet ist durch
einen Wandler bzw. Transducer (8/9, 9A), und zwar angeordnet in dem Inneren des Gehäuses, zum Abfühlen einer laufenden Axialposition des Kolbens in dem Gehäuse und zum Vorsehen von diese anzeigenden Eingangssignalen für die Steuereinheit.

2. Betätigersteuersystem nach Anspruch 1, wobei der Betätigerkolben folgendes aufweist: ein erstes Kolbenglied (3) und zwar gleitbar und abgedichtet in einer ersten Bohrung (2) aufgenommen, die in dem Gehäuse vorgesehen ist und die erste Kolbenstirnseite trägt und ein zweites Kolbenglied (18), daß die zweite Kolbenstirnseite (17) trägt und gleitbar und abgedichtet in einer zweiten Bohrung (19), die in dem Gehäuse vorgesehen ist, aufgenommen ist, wobei die ersten und zweiten Bohrungen axial in dem Körper getrennt sind und strömungsmittelmäßig voneinander isoliert sind.

3. Betätigersteuersystem nach Anspruch 2, das zusätzlich folgendes aufweist: ein erstes, von einem Elektromagneten gesteuertes Ventil (31 oder 32) strömungsmittelmäßig verbunden mit einer Quelle von unter Druck stehendem Strömungsmittel und ein zweites von einem Elektromagneten gesteuertes Ventil (33 oder 34) strömungsmittelmäßig verbunden mit einem Aus- bzw. Ablaß zum selektiven Unterdrucksetzen und Ablassen der zweiten Kammer (16).

4. Betätigersteuersystem nach Anspruch 3, wobei die von einem Elektromagneten gesteuerten Ventile in dem Inneren des Gehäuses angeordnet sind.

5. Betätigersteuersystem nach Anspruch 3 oder 4, wobei die von einem Elektromagneten gesteuerten Ventile (31 - 34) betrieben werden, und zwar ansprechend auf Befehlsausgangssignale von der Steuereinheit (29).

6. Betätigersteuersystem nach einem der Ansprüche 3, 4 oder 5, wobei die Verbindung des ersten Elektromagnetventils mit der Quelle von unter Druck stehendem Strömungsmittel Mittel umfaßt zum Ablassen von überschüssigem bzw. übermäßigem Druck, und zwar unabhängig von dem Betrieb der Elektromagnetventile.

## Revendications

1. Système de commande à vérin pour commander le fonctionnement d'un embrayage principal de véhicule (26) à commande hydraulique, repoussé en permanence sur une première position d'engagement total et destiné à être amené sur une seconde position par l'application d'une pression d'un fluide hydraulique sur un organe de commande hydraulique (27), ledit système comprenant :
un ensemble vérin (1) comportant un piston de vérin (3/18) mobile axialement dans un corps de vérin (1A) et ayant une première face (4) et une seconde face opposée (17), ladite première face étant au contact d'une première chambre (2) remplie en permanence de liquide hydraulique et reliée par un circuit hydraulique audit organe de commande hydraulique, et la seconde face étant au contact d'une seconde chambre (16) qui est elle-même, sur sélection, soumise à des pressions pneumatiques hautes ou basses, et comportant des moyens (5/28) chargeant en permanence ladite première chambre en liquide hydraulique et des moyens (7) repoussant en permanence ledit piston vers ladite seconde face, la pression haute exercée sur ladite seconde face permettant de forcer ledit piston vers la première face pour appliquer une pression hydraulique sur ledit organe de commande hydraulique ; et
une boîte de commande (29) pour commander la mise en pression de ladite seconde chambre, ledit système étant caractérisé par :
une sonde (8/9, 9A) située à l'intérieur dudit corps pour détecter une position axiale présente dudit piston dans ledit corps et transmettre à ladite boîte de commande des signaux d'entrée représentant cette position.

2. Système de commande à vérin selon la revendication 1, caractérisé en ce que ledit piston de vérin comprend un premier élément de piston (3) logé et pouvant coulisser, tout en assurant l'étanchéité, dans un premier alésage (2) prévu dans ledit corps et portant ladite première face de piston, et un second élément de piston (18) portant ladite seconde face de piston (17) et logé et pouvant coulisser, tout en assurant l'étanchéité, dans un second alésage (19) prévu dans ledit corps, lesdits premier et second alésages étant séparés axialement dans ledit corps et sans échange de fluide entre eux.

3. Système de commande de vérin selon la revendication 2, comprenant en plus une première électrovanne (31 ou 32) reliée par tuyauterie à une source de liquide sous pression et une seconde électrovanne (33 ou 34) reliée par tuyauterie à un circuit d'évacuation permettant, sur sélection, de mettre en pression de ladite seconde chambre (16) ou en évacuer la pression.

4. Système de commande à vérin selon la revendication 3, caractérisé en ce que lesdites électrovannes sont situées à l'intérieur dudit corps.

5. Système de commande à vérin selon la revendication 3 ou 4, caractérisé en ce que lesdites électrovannes (31 à 34) sont actionnées en réponse à des signaux de sortie de commande provenant de ladite boîte de commande (29).

6. Système de commande à vérin selon la revendication 3, 4 ou 5, caractérisé en ce que la liaison de ladite première électrovanne à ladite source de liquide sous pression comprend un moyen permettant d'évacuer une pression excessive indépendamment du fonctionnement desdites électrovannes.
